# EUROPÄISCHE PATENTSCHRIFT

(11) **EP 3 491 725 B1**
(45) Veröffentlichungstag und Bekanntmachung des Hinweises auf die Patenterteilung: **01.09.2021**
(21) Anmeldenummer: 17748452.4
(22) Anmeldetag: 28.07.2017
(51) Int. Cl.: H02M 1/36, H02M 7/12

(54) **SCHALTUNG ZUM VORLADEN EINES ZWISCHENKREISES UND ELEKTRISCHES SYSTEM**
CIRCUIT FOR PRE-CHARGING AN INTERMEDIATE CIRCUIT, AND ELECTRIC SYSTEM
CIRCUIT DE PRÉCHARGE D'UN CIRCUIT INTERMÉDIAIRE ET SYSTÈME ÉLECTRIQUE

(30) Priorität: 29.07.2016 DE 102016214063
(43) Veröffentlichungstag der Anmeldung: 05.06.2019
(73) Patentinhaber: Schmidhauser AG, 8590 Romanshorn (CH)
(72) Erfinder: ITTEN, Alex, 8590 Romanshorn (CH); DOCS, Zoltan, 1224 Budapest (HU)
(74) Vertreter: Patentanwälte Ruff, Wilhelm, Beier, Dauster & Partner mbB
(86) Internationale Anmeldenummer: PCT/EP2017/069202
(87) Internationale Veröffentlichungsnummer: WO 2018/020015

(56) Entgegenhaltungen:
- EP-A2- 1 909 368
- DE-A1-102010 030 129
- DE-A1-102013 215 572
- DE-A1-102013 223 538

## Beschreibung

Die Erfindung betrifft eine Schaltung zum Vorladen eines Zwischenkreises und ein elektrisches System.

Aus der DE 10 2014 217 908 A1 ist eine Schaltung zum Vorladen eines Zwischenkreises bzw. eines Zwischenkreiskondensators bekannt. Derartige Schaltungen sind dazu vorgesehen, bei einem Einschalten des elektrischen Systems, das den Zwischenkreis aufweist, den Zwischenkreis zunächst bis auf eine Spannung vorzuladen, die nahe bei einer Betriebsspannung einer Hochvoltbatterie liegt, die nach dem Vorladen den Zwischenkreis speist. Würde ein solches Vorladen unterbleiben, könnte beim Zuschalten der Hochvoltbatterie auf den Zwischenkreis ein unzulässig hoher Ladestrom fließen.

Die DE 10 2013 215 572 A1 zeigt eine Schaltung zum Vorladen eines Zwischenkreises mit einer ersten steuerbaren Energiequelle und einer zweiten steuerbaren Energiequelle, wobei die erste steuerbare Energiequelle und die zweite steuerbare Energiequelle ausgangsseitig in Serie zwischen einen positiven Zweig und einen negativen Zweig eines Zwischenkreises eingeschleift sind. Weiter ist eine Steuereinrichtung gezeigt, die mit der ersten Energiequelle und der zweiten Energiequelle in Signalverbindung steht und die dazu ausgebildet ist, die erste Energiequelle und die zweite Energiequelle zur Erzeugung eines Ausgangssignalmusters anzusteuern, um den Zwischenkreis vorzuladen.

Die EP 1 909 368 A2 und die DE 10 2010 030 129 A1 zeigen jeweils Isolationsüberwachungen für Umrichteranwendungen.

Die DE 10 2013 223 538 A1 zeigt eine Schaltungsanordnung und ein Verfahren zum Erzeugen einer Zwischenkreisspannung für einen Wechselrichter.

Die US 2015/0035360 A1 zeigt einen bidirektionalen Batteriewandler für einen elektrischen Energiespeicher eines Energieversorgungssystems.

Die WO 2016/091300 A1 zeigt einen bidirektionalen DC-Wandler mit geteiltem Zwischenkreis.

Die DE 10 2009 054 823 A1 zeigt ein Energieübertragungssystem für ein Energiespeichersystem.

Die DE 10 2013 225 884 A1 zeigt eine Schaltung zum Vorladen eines elektrischen Zwischenkreisspeichers.

Der Erfindung liegt die Aufgabe zugrunde, eine Schaltung zum Vorladen eines Zwischenkreises und ein elektrisches System zur Verfügung zu stellen, die ein zuverlässiges Vorladen des Zwischenkreises ermöglichen.

Die Erfindung löst diese Aufgabe durch eine Schaltung zum Vorladen eines Zwischenkreises nach Anspruch 1 und ein elektrisches System nach Anspruch 9.

Die Schaltung ist dazu ausgebildet, einen Zwischenkreis, insbesondere einen oder mehrere Zwischenkreiskondensatoren des Zwischenkreises, auf eine Vorladespannung vorzuladen. Die Vorladespannung kann von einer Betriebsspannung eines elektrischen Energiespeichers, beispielsweise in Form einer Batterie, abhängen, der bzw. die nach dem Vorladen den Zwischenkreis speist. Die Vorladespannung kann beispielsweise gleich der Betriebsspannung sein oder um einen vorgegebenen Differenzwert (typisch wenige Volt) kleiner als die Betriebsspannung sein.

Der Zwischenkreis weist, neben einem oder mehreren Zwischenkreiskondensatoren, einen positiven Zweig und einen negativen Zweig auf. An dem positiven Zweig steht typisch ein positives Zwischenkreispotential an und an dem negativen Zweig steht typisch ein negatives Zwischenkreispotential an.

Die Schaltung zum Vorladen eines Zwischenkreises weist eine erste steuerbare Energiequelle und eine zweite steuerbare Energiequelle auf. Die erste und die zweite Energiequelle können ansteuerungsabhängig eine an ihrem jeweiligen Ausgang abgegebene elektrische Energie bzw. elektrische Leistung verändern bzw. geeignet einstellen. Die erste Energiequelle und die zweite Energiequelle sind an ihren jeweiligen Ausgängen in Serie zwischen den positiven Zweig und den negativen Zweig eingeschleift.

Die Schaltung zum Vorladen eines Zwischenkreises weist weiter eine Entstöreinheit auf, die zwischen einen Verbindungsknoten des Ausgangs der ersten Energiequelle und des Ausgangs der zweiten Energiequelle und ein Bezugspotential, insbesondere PE (Protective Earth), eingeschleift ist. Die Entstöreinheit ist dazu ausgebildet, leitungsgebundene und/oder abgestrahlte Störungen zu reduzieren. Die Entstöreinheit kann eine Messimpedanz bilden bzw. aufweisen und beispielsweise einen Widerstand und einen dazu parallel geschalteten Kondensator aufweisen.

Die Schaltung zum Vorladen eines Zwischenkreises weist weiter eine Steuereinrichtung auf, beispielsweise in Form eines Mikroprozessors oder eines digitalen Signalprozessors. Die Steuereinrichtung steht mit der ersten Energiequelle und der zweiten Energiequelle in Signalverbindung und ist dazu ausgebildet, die erste Energiequelle und die zweite Energiequelle zur Erzeugung eines Ausgangssignalmusters, beispielsweise in Form eines Ausgangsspannungsmusters, derart anzusteuern, dass diese den Zwischenkreis vorladen.

Gemäß einer Ausführungsform ist die erste Energiequelle eine Spannungsquelle, eine Stromquelle oder eine kombinierte Spannungs-/Stromquelle. Entsprechend kann die die zweite Energiequelle eine Spannungsquelle, eine Stromquelle oder eine kombinierte Spannungs-/Stromquelle sein.

Die erste Energiequelle und/oder die zweite Energiequelle kann/können die Energie aus einem Niederspannungs-Energiespeicher oder Niederspannungs-Generator beziehen, um das jeweilige Ausgangssignalmuster zu erzeugen bzw. den Zwischenkreis vorzuladen.

Gemäß einer Ausführungsform weist die erste Energiequelle einen galvanisch trennenden DC/DC-Wandler auf, der beispielsweise aus einem Niedervoltversorgungsnetz, beispielsweise aus einer Batterie, gespeist ist. Entsprechend kann die zweite Energiequelle einen galvanisch trennenden DC/DC-Wandler aufweisen, der beispielsweise aus dem Niedervoltversorgungsnetz gespeist ist.

Gemäß einer Ausführungsform ist die Steuereinrichtung dazu ausgebildet, die erste Energiequelle und die zweite Energiequelle unabhängig voneinander anzusteuern.

Gemäß einer Ausführungsform weist die Schaltung eine Messeinrichtung auf, die dazu ausgebildet ist, eine Spannung zwischen einem Mittenpotential und einem Bezugspotential, insbesondere PE, zu messen, und/oder eine Spannung zwischen einem an dem positiven Zweig anstehenden Potential und dem Bezugspotential, insbesondere PE, zu messen, und/oder eine Spannung zwischen einem an dem negativen Zweig anstehenden Potential und dem Bezugspotential, insbesondere PE, zu messen, und/oder eine an der Entstöreinheit abfallende Spannung zu messen. Die Messeinrichtung kann weiter dazu ausgebildet sein, Ströme innerhalb der Schaltung und/oder innerhalb von weiteren Komponenten zu messen.

Gemäß einer Ausführungsform ist die Messeinrichtung dazu ausgebildet, eine Fehlfunktion der ersten Energiequelle und/oder der zweiten Energiequelle basierend auf den gemessenen Spannungen und/oder Strömen zu detektieren, und im Fall einer detektierten Fehlfunktion einer der beiden Energiequellen die jeweils fehlerfreie Energiequelle zu aktivieren, um den Zwischenkreis vorzuladen.

Gemäß einer Ausführungsform ist die Steuereinrichtung dazu ausgebildet, die erste Energiequelle und die zweite Energiequelle abwechselnd zur Erzeugung des Ausgangsspannungssignalmusters als ein Ausgangsspannungstestmuster anzusteuern. Die Steuereinrichtung kann hierzu beispielsweise dazu ausgebildet sein, während erster Zeitintervalle die erste Energiequelle zur Erzeugung einer Ausgangsspannung anzusteuern und die zweite Energiequelle zu deaktivieren, so dass diese keine Ausgangsspannung erzeugt, und während zweiter Zeitintervalle die zweite Energiequelle zur Erzeugung einer Ausgangsspannung anzusteuern und die erste Energiequelle zu deaktivieren, so dass diese keine Ausgangsspannung erzeugt. Die ersten Zeitintervalle und die zweiten Zeitintervalle folgen dann abwechselnd aufeinander. Das Ausgangsspannungstestmuster kann beispielsweise auch zur Überprüfung der ordnungsgemäßen Funktion der Messeinrichtung dienen.

Gemäß einer Ausführungsform ist die Steuereinrichtung dazu ausgebildet, während des Erzeugens des Ausgangsspannungstestmusters basierend auf der oder den mittels der Messeinrichtung gemessenen Spannungen/Strömen sowohl symmetrische als auch asymmetrische Isolationsfehler im Zwischenkreis zu detektieren, insbesondere mittels unterschiedlicher Einschaltbedingungen der beiden Energiequellen Isolationsfehler zu lokalisieren.

Das erfindungsgemäße elektrische System weist eine oben beschriebene Schaltung zum Vorladen eines Zwischenkreises auf.

Weiter weist das elektrische System einen oder mehrere Zwischenkreiskondensatoren auf, der bzw. die zwischen den positiven Zweig und den negativen Zweig des Zwischenkreises eingeschleift ist/sind.

Die Schaltung zum Vorladen eines Zwischenkreises ist dazu ausgebildet, beispielsweise nach einem Einschalten des elektrischen Systems, den oder die Zwischenkreiskondensatoren bis auf eine vorgegebene Vorladespannung aufzuladen. Nach dem Aufladen des Zwischenkreiskondensators bis auf die Vorladespannung kann der Zwischenkreis beispielsweise mit einer Batterie gekoppelt werden.

Gemäß einer Ausführungsform weist der Stromrichter eine Anzahl von ansteuerbaren elektrischen Schaltelementen auf, beispielsweise in Form von Halbleiterschaltern, wie beispielsweise FETs oder IGBTs, wobei die Steuereinrichtung dazu ausgebildet ist, die elektrischen Schaltelemente anzusteuern. Die Messeinrichtung ist dazu ausgebildet, Ströme und Spannungen des Stromrichters (und gegebenenfalls auch der Schaltung selbst) bei unterschiedlichen Einschaltzuständen der ersten Energiequelle und der zweiten Energiequelle und bei unterschiedlichen Schaltzuständen der Schaltelemente zu messen und derart auszuwerten, dass mögliche Isolationsfehler im gesamten elektrischen System detektierbar und lokalisierbar sind.

Das elektrische System kann weiter einen elektrischen Energiespeicher, insbesondere in Form einer Batterie, aufweisen, der bzw. die dazu ausgebildet ist, den Zwischenkreis nach dem Vorladen mit elektrischer Energie zu versorgen.

Die Erfindung wird nachfolgend detailliert unter Bezugnahme auf die Zeichnungen beschrieben. Hierbei zeigen:
- Fig. 1: ein schematisches Blockschaltbild eines erfindungsgemäßen elektrischen Systems,
- Fig. 2: ein schematisches Blockschaltbild einer weiteren Ausführungsform eines erfindungsgemäßen elektrischen Systems,
- Fig. 3: Signalverläufe über der Zeit der in Fig. 1 und Fig. 2 gezeigten elektrischen Systeme bei symmetrischen Isolationswiderständen und
- Fig. 4: Signalverläufe über der Zeit der in Fig. 1 und Fig. 2 gezeigten elektrischen Systeme bei asymmetrischen Isolationswiderständen.

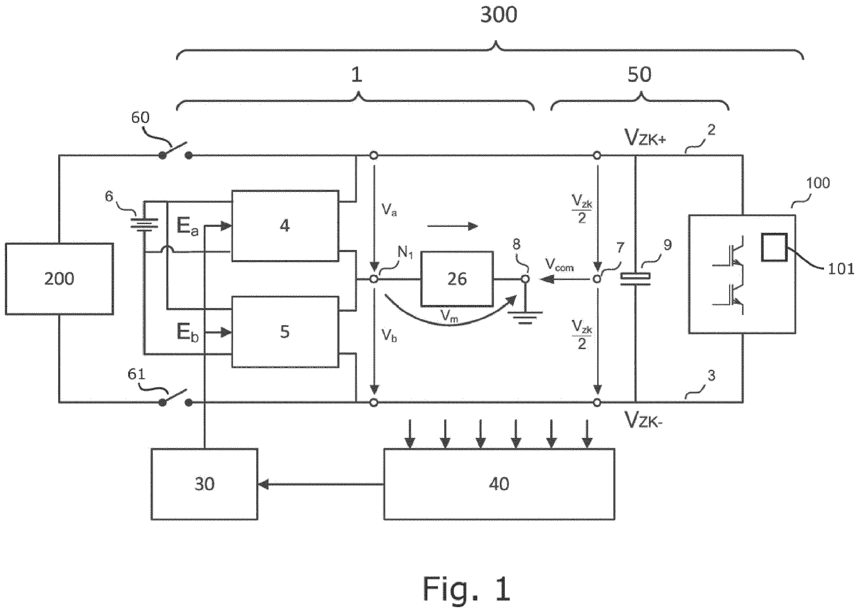

Fig. 1 zeigt ein schematisches Blockschaltbild eines erfindungsgemäßen elektrischen Systems 300.

Das elektrische System 300 weist eine Schaltung 1 zum Vorladen eines Zwischenkreiskondensators 9 eines Zwischenkreises 50 auf. Der Zwischenkreiskondensator 9 ist zwischen einen positiven Zweig 2 und einen negativen Zweig 3 des Zwischenkreises 50 eingeschleift. Auf dem positiven Zweig 2 liegt ein positives Zwischenkreispotential Vzk+ an und auf dem negativen Zweig 3 liegt ein negatives Zwischenkreispotential Vzk- an. Die Schaltung 1 ist dazu vorgesehen, den Zwischenkreiskondensator 9 bis auf eine definierte Vorladespannung aufzuladen.

Das elektrische System 300 weist weiter einen Stromrichter 100 auf, beispielsweise in Form eines AC/DC-, DC/DC- oder DC/AC-Wandlers, der aus dem Zwischenkreis 50 gespeist ist.

Das elektrische System 300 weist weiter einen elektrischen Energiespeicher 200 auf, beispielsweise in Form einer Batterie. Der elektrische Energiespeicher 200 speist nach dem Vorladen des Zwischenkreises 50 den Zwischenkreis 50 unmittelbar, indem er beispielsweise direkt elektrisch leitend mit dem Zwischenkreis 50 verbunden wird. Hierzu sind ansteuerbare Schaltmittel 60 und 61 vorgesehen, die den elektrischen Energiespeicher 200 während des Vorladens vom Zwischenkreis 50 trennen und den elektrischen Energiespeicher 200 nach dem Vorladen mit dem Zwischenkreis 50 elektrisch verbinden.

Die Schaltung 1 zum Vorladen des Zwischenkreises 50 bzw. des Zwischenkreiskondensators 2 weist eine erste steuerbare Energiequelle 4, beispielsweise aufweisend einen galvanisch trennenden DC/DC-Wandler, und eine zweite steuerbare Energiequelle 5 auf, beispielsweise ebenfalls aufweisend einen galvanisch trennenden DC/DC-Wandler.

Die erste Energiequelle 4 und die zweite Energiequelle 5 sind ausgangsseitig in Serie zwischen den positiven Zweig 2 und den negativen Zweig 3 eingeschleift. Die erste Energiequelle 4 und die zweite Energiequelle 5 sind ausgangsseitig an einem Verbindungsknoten N1 elektrisch miteinander verbunden. Die erste Energiequelle 4 und die zweite Energiequelle 5 werden jeweils eingangsseitig mittels einer Vorlade-Spannungsversorgung 6 versorgt, die beispielsweise als Energiespeicher in Form einer Batterie ausgeführt sein kann. Die erste Energiequelle 4 erzeugt an ihrem Ausgang eine Ausgangsspannung Va und die zweite Energiequelle 5 erzeugt an ihrem Ausgang eine Ausgangsspannung Vb.

Eine Entstöreinheit 26 ist zwischen den Verbindungsknoten N1 und ein Bezugspotential in Form von PE (Protective Earth) eingeschleift. Die Entstöreinheit 26 weist eine bekannte Messimpedanz auf, die auch zur Isolationsmessung verwendet werden kann.

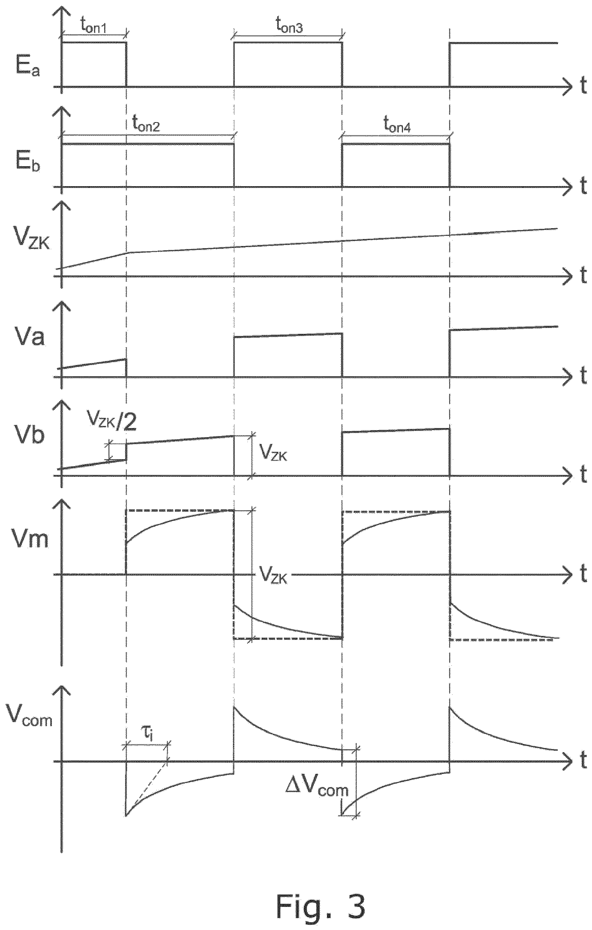

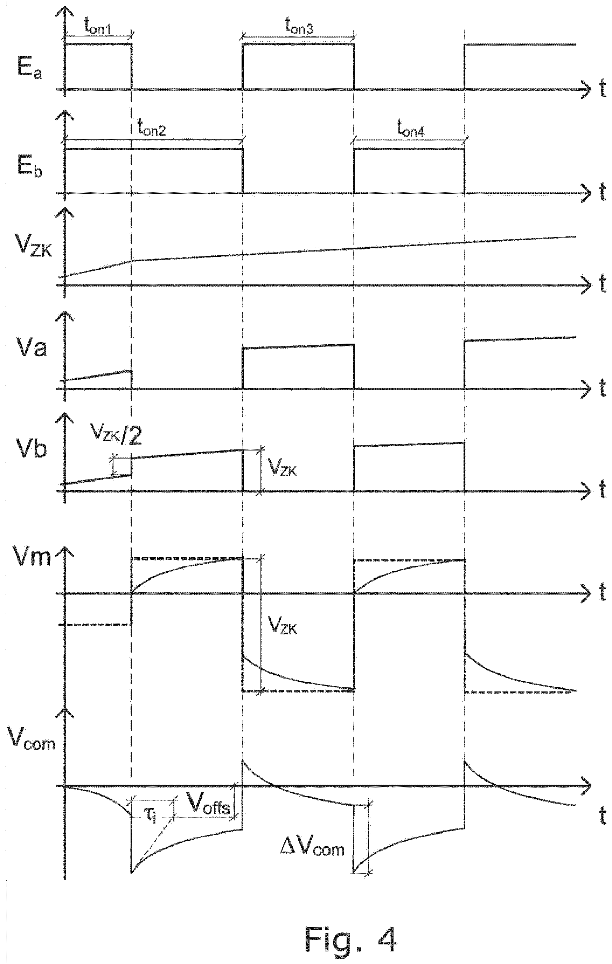

Die Schaltung 1 zum Vorladen des Zwischenkreises 50 bzw. das elektrische System 300 weist weiter eine Steuereinrichtung 30 in Form eines digitalen Signalprozessors auf. Die Steuereinrichtung 30 steuert unter anderem die Energiequellen 4 und 5, um in einer Vorladephase den Zwischenkreis 50 vorzuladen, was nachfolgend unter Bezugnahme auf Fig. 3 und Fig. 4 beschrieben wird.

Der Stromrichter 100 weist eine Anzahl von elektrischen Schaltelementen 101 auf, wobei die Steuereinrichtung 30 dazu ausgebildet ist, die elektrischen Schaltelemente 101 anzusteuern.

Aus Gründen der einfacheren Darstellbarkeit ist schematisch lediglich ein einzelnes Schaltelement 101 dargestellt. Es versteht sich, dass der Stromrichter 100 typisch mehrere derartige Schaltelemente 101 aufweist. Im Übrigen sei auch auf die Fachliteratur zu Stromrichtern verwiesen.

Die Schaltung 1 zum Vorladen eines Zwischenkreises 50 bzw. das elektrische System 300 weist weiter eine Messeinrichtung 40 auf, die dazu ausgebildet ist, eine oder mehrere Spannungen und/oder Ströme zu messen, die bei der Detektion und Lokalisierung von Isolationsfehlern verwendet werden.

Die Messeinrichtung 40 kann beispielsweise folgende Spannungen messen: eine Spannung Vcom zwischen einem Mittenpotential und einem Bezugspotential, insbesondere PE, und/oder eine Spannung zwischen einem an dem positiven Zweig 2 anstehenden Potential und dem Bezugspotential, und/oder eine Spannung zwischen einem an dem negativen Zweig 3 anstehenden Potential und dem Bezugspotential, und/oder eine Spannung Vm, die an der Entstöreinheit 26 abfällt.

Zusätzlich kann die Messeinrichtung 40 folgende Messgrößen erfassen: Spannungen und Ströme im Stromrichter 100 bei unterschiedlichen Einschaltzuständen der ersten Energiequelle 4 und der zweiten Energiequelle 5 und unterschiedlichen Schaltzuständen der Schaltelemente 101. Die Messeinrichtung 40 kann die gemessenen Spannungen/Ströme derart auswerten, dass mögliche Isolationsfehler im gesamten elektrischen System 300 detektierbar und lokalisierbar sind. Zu den Grundlagen der Auswertung von Spannungen und Strömen zum Detektieren und Lokalisieren von Isolationsfehlern sei auch auf die einschlägige Fachliteratur verwiesen.

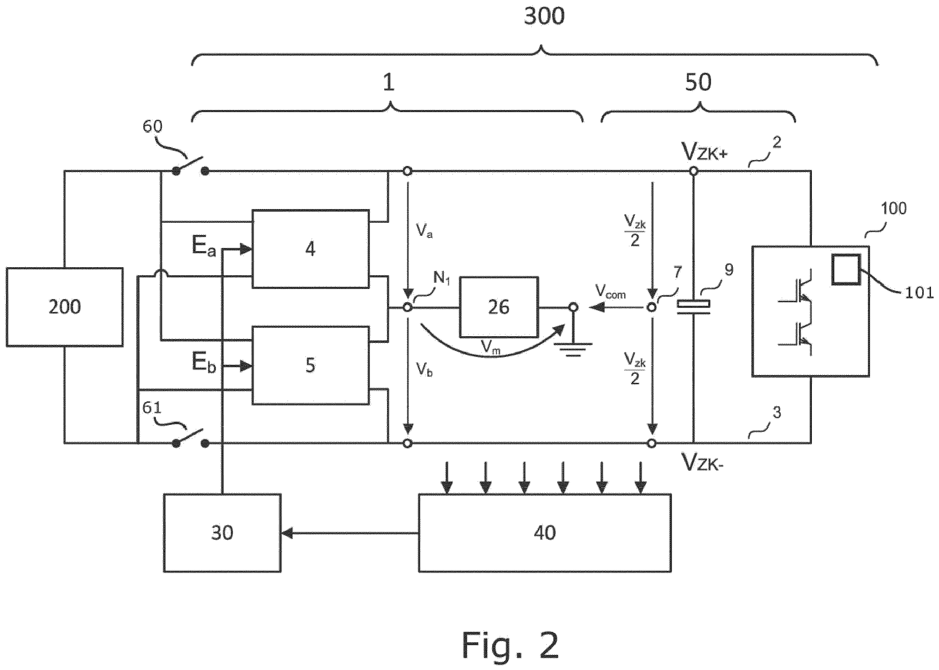

Fig. 2 zeigt ein Blockschaltbild einer weiteren Ausführungsform eines elektrischen Systems 300. Anders als bei der in Fig. 1 gezeigten Ausführungsform werden die beiden Energiequellen 4 und 5 währen des Vorladens nicht aus der Vorlade-Spannungsversorgung 6 versorgt, sondern aus dem Energiespeicher 200.

Fig. 3 zeigt Signalverläufe über der Zeit der in Fig. 1 bzw. Fig. 2 gezeigten Schaltung 1 bei symmetrischen Isolationswiderständen. Hierbei bezeichnen:
- Ea: ein Ansteuersignal der ersten Energiequelle 4
- Eb: ein Ansteuersignal der zweiten Energiequelle 5
- Vzk: eine Zwischenkreisspannung über dem Zwischenkreiskondensator 9
- Va: die Ausgangsspannung der Energiequelle 4
- Vb: die Ausgangsspannung der Energiequelle 5
- Vm: die an der Messimpedanz der Entstöreinheit abfallende Spannung
- Vcom: eine Spannung zwischen einem Mittenpotential und PE

Bezugnehmend auf Fig. 3, erzeugt die Steuereinrichtung 30 während einer Zeitdauer ton1 ein Ausgangsspannungsmuster durch Erzeugen der Ansteuersignale Ea und Eb der Energiequellen 4 und 5 derart, dass gemäß dem Ausgangsspannungsmuster beide Energiequellen bzw. DC/DC-Wandler 4 und 5 parallel arbeiten und im Wesentlichen identische Spannungen Va bzw. Vb ausgeben.

Wie in Fig. 3 gezeigt, nimmt die Zwischenkreisspannung Vzk kontinuierlich zu, d.h. der Zwischenkreis 50 bzw. dessen Zwischenkreiskondensator 9 wird vorgeladen.

Nach Ablauf der Zeitdauer ton1 beginnt zusätzlich zum Vorladen des Zwischenkreises 50 eine Detektion von Isolationsfehlern. Hierzu wird das Ausgangsspannungsmuster als Ausgangsspannungstestmuster erzeugt.

Zunächst wird hierzu das Ansteuersignal Ea der ersten Energiequelle 4 derart verändert (d.h. deaktiviert), dass die erste Energiequelle 4 abgeschaltet wird.

Nach Ablauf einer Zeitdauer ton2 aktiviert die Steuereinrichtung 30 das Steuersignal Ea und deaktiviert das Steuersignal Eb. Bezogen auf das vorher Beschriebene erfolgt nun eine Signalumkehr.

Die beiden Energiequellen 4 und 5 werden nun zur Erzeugung des Ausgangsspannungstestmusters so lange abwechselnd angeschaltet und abgeschaltet, siehe exemplarisch ton3 und ton4, bis die gewünschten Isolationswiderstände ermittelt und lokalisiert sind.

Die beiden Energiequellen 4 und 5 erfüllen folglich eine Doppelfunktion, nämlich einerseits bewirken sie ein Vorladen des Zwischenkreises 50 und andererseits ermöglichen sie es zusammen mit der Entstöreinheit 26 Isolationsfehler im Zwischenkreis 50 zu detektieren und zu lokalisieren.

Zur Messung der Isolationswiderstände sei angenommen, dass die Impedanz der Entstöreinheit 26 bekannt ist.

Zur Berechnung eines möglichen Isolationsfehlers kann eine Zustands- und Parameterschätzung mittels eines erweiterten Kalman-Filters verwendet werden. Selbstverständlich sind auch andere Berechnungsmodelle und Berechnungsmethoden möglich. Insoweit sei auch auf die einschlägige Fachliteratur verwiesen.

Fig. 4 zeigt die Signalverläufe über der Zeit bei asymmetrischen Isolationswiderständen.

## Patentansprüche

1. Schaltung (1) zum Vorladen eines Zwischenkreises (50), wobei der Zwischenkreis (50) einen positiven Zweig (2) und einen negativen Zweig (3) aufweist, wobei die Schaltung (1) zum Vorladen eines Zwischenkreises (50) aufweist:
- eine erste steuerbare Energiequelle (4),
- eine zweite steuerbare Energiequelle (5), wobei die erste steuerbare Energiequelle (4) und die zweite steuerbare Energiequelle (5) ausgangsseitig in Serie zwischen den positiven Zweig (2) und den negativen Zweig (3) eingeschleift sind, und
- eine Steuereinrichtung (30),
- die mit der ersten Energiequelle (4) und der zweiten Energiequelle (5) in Signalverbindung steht, und
- die dazu ausgebildet ist, die erste Energiequelle (4) und die zweite Energiequelle (5) zur Erzeugung eines Ausgangssignalmusters (Va, Vb) anzusteuern, um den Zwischenkreis (50) vorzuladen,
**dadurch gekennzeichnet, dass**
- die Schaltung (1) zum Vorladen eines Zwischenkreises (50) weiter aufweist:
- eine Entstöreinheit (26), wobei die Entstöreinheit (26) zwischen einen Verbindungsknoten (N1) des Ausgangs der ersten steuerbaren Energiequelle (4) und des Ausgangs der zweiten steuerbaren Energiequelle (5) und ein Bezugspotential eingeschleift ist.

2. Schaltung (1) zum Vorladen eines Zwischenkreises (50) nach Anspruch 1, **dadurch gekennzeichnet, dass**
- die erste Energiequelle (4) und/oder die zweite Energiequelle (5) eine Spannungsquelle, eine Stromquelle oder eine kombinierte Spannungs-/Stromquelle ist/sind.

3. Schaltung (1) zum Vorladen eines Zwischenkreises (50) nach Anspruch 1 oder 2, **dadurch gekennzeichnet, dass**
- die erste Energiequelle (4) einen galvanisch trennenden DC/DC-Wandler aufweist und/oder
- die zweite Energiequelle (5) einen galvanisch trennenden DC/DC-Wandler aufweist.

4. Schaltung (1) zum Vorladen eines Zwischenkreises (50) nach einem der vorhergehenden Ansprüche, **dadurch gekennzeichnet, dass**
- die Steuereinrichtung (30) dazu ausgebildet ist, die erste Energiequelle (4) und die zweite Energiequelle (5) unabhängig voneinander anzusteuern.

5. Schaltung (1) zum Vorladen eines Zwischenkreises (50) nach einem der vorhergehenden Ansprüche, aufweisend:
- eine Messeinrichtung (40), die dazu ausgebildet ist, eine Spannung (Vcom) zwischen einem Mittenpotential (7) und dem Bezugspotential (8) zu messen, und/oder eine Spannung zwischen einem an dem positiven Zweig (2) anstehenden Potential und dem Bezugspotential (8) zu messen, und/oder eine Spannung zwischen einem an dem negativen Zweig (3) anstehenden Potential und dem Bezugspotential (8) zu messen, und/oder eine an der Entstöreinheit (26) abfallende Spannung (Vm) zu messen.

6. Schaltung (1) zum Vorladen eines Zwischenkreises (50) nach Anspruch 5, **dadurch gekennzeichnet, dass**
- die Messeinrichtung (40) dazu ausgebildet ist, eine Fehlfunktion der ersten Energiequelle (4) und/oder der zweiten Energiequelle (5) zu detektieren, und im Fall einer detektierten Fehlfunktion einer der beiden Energiequellen (4, 5) die jeweils fehlerfreie Energiequelle zu aktivieren, um den Zwischenkreis (50) vorzuladen.

7. Schaltung (1) zum Vorladen eines Zwischenkreises (50) nach einem der vorhergehenden Ansprüche, **dadurch gekennzeichnet, dass**
- die Steuereinrichtung (30) dazu ausgebildet ist, die erste Energiequelle (4) und die zweite Energiequelle (5) abwechselnd zur Erzeugung eines Ausgangsspannungstestmusters (Va, Vb) anzusteuern.

8. Schaltung (1) zum Vorladen eines Zwischenkreises (50) nach einem der Ansprüche 5 bis 7, **dadurch gekennzeichnet, dass**
- die Steuereinrichtung (30) dazu ausgebildet ist, basierend auf der oder den mittels der Messeinrichtung (40) gemessenen Spannungen sowohl symmetrische als auch asymmetrische Isolationsfehler im Zwischenkreis (50) zu detektieren, insbesondere mittels unterschiedlicher Einschaltbedingungen der beiden Energiequellen (4, 5) Isolationsfehler zu lokalisieren.

9. Elektrisches System (300), aufweisend:
- eine Schaltung (1) zum Vorladen eines Zwischenkreises (50) nach einem der vorhergehenden Ansprüche,
- einen Zwischenkreiskondensator (9), der zwischen den positiven Zweig (2) und den negativen Zweig (3) des Zwischenkreises (50) eingeschleift ist, wobei die Schaltung (1) zum Vorladen eines Zwischenkreises (50) dazu ausgebildet ist, den Zwischenkreiskondensator (9) bis auf eine Vorladespannung aufzuladen, und
- einen Stromrichter (100), insbesondere einen AC/DC-, DC/DC- oder DC/AC-Wandler, der aus dem Zwischenkreis (50) gespeist ist.

10. Elektrisches System (300) nach Anspruch 9, **dadurch gekennzeichnet, dass**
- der Stromrichter (100) eine Anzahl von elektrischen Schaltelementen (101) aufweist, wobei die Steuereinrichtung (30) dazu ausgebildet ist, die elektrischen Schaltelemente (101) anzusteuern,
- wobei die Messeinrichtung (40) dazu ausgebildet ist, Ströme und Spannungen des Stromrichters (100) bei unterschiedlichen Einschaltzuständen der ersten Energiequelle (4), der zweiten Energiequelle (5) und unterschiedlichen Schaltzuständen der Schaltelemente (101) zu messen und derart auszuwerten, dass mögliche Isolationsfehler im gesamten elektrischen System (300) detektierbar und lokalisierbar sind.

## Claims

1. Circuit (1) for pre-charging an intermediate circuit (50), wherein the intermediate circuit (50) has a positive branch (2) and a negative branch (3), wherein the circuit (1) for pre-charging an intermediate circuit (50) comprises:
- a first controllable energy source (4),
- a second controllable energy source (5), wherein the first controllable energy source (4) and the second controllable energy source (5) are connected, on the output side, in series between the positive branch (2) and the negative branch (3), and
- a control device (30),
- which is connected in a signal-transmitting manner to the first energy source (4) and the second energy source (5), and
- which is configured to actuate the first energy source (4) and the second energy source (5) to generate an output signal pattern (Va, Vb) in order to pre-charge the intermediate circuit (50),
**characterized in that**
- the circuit (1) for pre-charging an intermediate circuit (50) further comprises:
- an interference suppression unit (26), wherein the interference suppression unit (26) is connected between a connecting node (N1) of the output of the first controllable energy source (4) and of the output of the second controllable energy source (5) and a reference-ground potential.

2. Circuit (1) for pre-charging an intermediate circuit (50) according to claim 1, **characterized in that**
- the first energy source (4) and/or the second energy source (5) is/are a voltage source, a current source or a combined voltage/current source.

3. Circuit (1) for pre-charging an intermediate circuit (50) according to claim 1 or 2, **characterized in that**
- the first energy source (4) has a DC-isolating DC/DC converter and/or
- the second energy source (5) has a DC-isolating DC/DC converter.

4. Circuit (1) for pre-charging an intermediate circuit (50) according to any of the preceding claims, **characterized in that**
- the control device (30) is configured to actuate the first energy source (4) and the second energy source (5) independently of one another.

5. Circuit (1) for pre-charging an intermediate circuit (50) according to any of the preceding claims, comprising:
- a measurement device (40), which is configured to measure a voltage (Vcom) between a middle potential (7) and the reference-ground potential (8), and/or to measure a voltage between a potential present at the positive branch (2) and the reference-ground potential (8), and/or to measure a voltage between a potential present at the negative branch (3) and the reference-ground potential (8), and/or to measure a voltage (Vm) dropped at the interference suppression unit (26).

6. Circuit (1) for pre-charging an intermediate circuit (50) according to claim 5, **characterized in that**
- the measurement device (40) is configured to detect a malfunction of the first energy source (4) and/or of the second energy source (5) and, in the event of a detected malfunction of one of the two energy sources (4, 5), to activate the respectively fault-free energy source, in order to pre-charge the intermediate circuit (50).

7. Circuit (1) for pre-charging an intermediate circuit (50) according to any of the preceding claims, **characterized in that**
- the control device (30) is configured to actuate the first energy source (4) and the second energy source (5) in alternation to generate an output voltage test pattern (Va, Vb).

8. Circuit (1) for pre-charging an intermediate circuit (50) according to any of claims 5 to 7, **characterized in that**
- the control device (30) is configured to detect, based on the voltage or voltages measured by means of the measurement device (40), both symmetrical and asymmetrical insulation faults in the intermediate circuit (50), in particular to locate insulation faults by means of different switch-on conditions of the two energy sources (4, 5).

9. Electrical system (300), having:
- a circuit (1) for pre-charging an intermediate circuit (50) according to any one of the preceding claims,
- an intermediate circuit capacitor (9), which is connected between the positive branch (2) and the negative branch (3) of the intermediate circuit (50), wherein the circuit (1) for pre-charging an intermediate circuit (50) is configured to charge the intermediate circuit capacitor (9) up to a pre-charging voltage, and
- a current converter (100), in particular an AC/DC, DC/DC or DC/AC converter, which is fed from the intermediate circuit (50).

10. Electrical system (300) according to claim 9, **characterized in that**
- the current converter (100) has a number of electrical switching elements (101), wherein the control device (30) is configured to actuate the electrical switching elements (101),
- wherein the measurement device (40) is configured to measure currents and voltages of the current converter (100) in different switch-on states of the first energy source (4), of the second energy source (5) and different switching states of the switching elements (101) and to evaluate same in such a way that possible insulation faults in the entire electrical system (300) can be detected and located.

## Revendications

1. Circuit (1) de précharge d'un circuit intermédiaire (50), dans lequel le circuit intermédiaire (50) présente une branche positive (2) et une branche négative (3), dans lequel le circuit (1) de précharge d'un circuit intermédiaire (50) présente :
- une première source d'énergie (4) contrôlable,
- une deuxième source d'énergie (5) contrôlable, dans lequel la première source d'énergie (4) contrôlable et la deuxième source d'énergie (5) contrôlable sont connectées, côté sortie, en série entre la branche positive (2) et la branche négative (3), et
- un dispositif de commande (30),
- qui est en liaison de signalisation avec la première source d'énergie (4) et la deuxième source d'énergie (5), et
- qui est configuré pour actionner la première source d'énergie (4) et la deuxième source d'énergie (5) à la génération d'un modèle de signal de sortie (Va, Vb), afin de précharger le circuit intermédiaire (50),
**caractérisé en ce que**
- le circuit (1) de précharge d'un circuit intermédiaire (50) présente en outre :
- une unité d'antiparasitage (26), dans lequel l'unité d'antiparasitage (26) est connectée entre un nœud de jonction (N1) de la sortie de la première source d'énergie (4) contrôlable et de la sortie de la deuxième source d'énergie (5) contrôlable et un potentiel de référence.

2. Circuit (1) de précharge d'un circuit intermédiaire (50) selon la revendication 1, **caractérisé en ce que**
- la première source d'énergie (4) et/ou la deuxième source d'énergie (5) sont/est une source de tension, une source de courant ou une source combinée de tension/courant.

3. Circuit (1) de précharge d'un circuit intermédiaire (50) selon la revendication 1 ou 2, **caractérisé en ce que**
- la première source d'énergie (4) présente un convertisseur DC/DC d'isolement galvanique et/ou
- la deuxième source d'énergie (5) présente un convertisseur DC/DC d'isolement galvanique.

4. Circuit (1) de précharge d'un circuit intermédiaire (50) selon l'une quelconque des revendications précédentes, **caractérisé en ce que**
- le dispositif de commande (30) est configuré pour actionner la première source d'énergie (4) et la deuxième source d'énergie (5) indépendamment l'une de l'autre.

5. Circuit (1) de précharge d'un circuit intermédiaire (50) selon l'une quelconque des revendications précédentes, comprenant :
- un dispositif de mesure (40) configuré pour mesurer une tension (Vcom) entre un potentiel de milieu (7) et le potentiel de référence (8), et/ou pour mesurer une tension entre un potentiel présent à la branche positive (2) et le potentiel de référence (8), et/ou pour mesurer une tension entre un potentiel présent à la branche négative (3) et le potentiel de référence (8), et/ou pour mesurer une tension (Vm) chutant à l'unité d'antiparasitage (26).

6. Circuit (1) de précharge d'un circuit intermédiaire (50) selon la revendication 5, **caractérisé en ce que**
- le dispositif de mesure (40) est configuré pour détecter un dysfonctionnement de la première source d'énergie (4) et/ou de la deuxième source d'énergie (5) et, en cas d'un dysfonctionnement détecté de l'une des deux sources d'énergie (4, 5), pour activer la source d'énergie en fonctionnement correct respective, afin de précharger le circuit intermédiaire (50).

7. Circuit (1) de précharge d'un circuit intermédiaire (50) selon l'une quelconque des revendications précédentes, **caractérisé en ce que**
- le dispositif de commande (30) est configuré pour actionner la première source d'énergie (4) et la deuxième source d'énergie (5) en alternance pour la génération d'un modèle de test de tension de sortie (Va, Vb).

8. Circuit (1) de précharge d'un circuit intermédiaire (50) selon l'une quelconque des revendications 5 à 7, **caractérisé en ce que**
- le dispositif de commande (30) est configuré, basé sur l'une tension mesurée ou les plusieurs tensions mesurées par le dispositif de mesure (40), pour détecter aussi bien des défauts d'isolement symétriques que asymétriques dans le circuit intermédiaire (50), en particulier pour localiser des défauts d'isolement par des conditions d'activation différentes des deux sources d'énergie (4, 5).

9. Système électrique (300), comprenant :
- un circuit (1) de précharge d'un circuit intermédiaire (50) selon l'une quelconque des revendications précédentes,
- un condensateur de circuit intermédiaire (9) connecté entre la branche positive (2) et la branche négative (3) du circuit intermédiaire (50), dans lequel le circuit (1) de précharge d'un circuit intermédiaire (50) est configuré pour charger le condensateur de circuit intermédiaire (9) jusqu'à une tension de précharge, et
- un convertisseur de courant (100), en particulier un convertisseur AC/DC, DC/DC ou DC/AC, alimenté à partir du circuit intermédiaire (50).

10. Système électrique (300) selon la revendication 9, **caractérisé en ce que**
- le convertisseur de courant (100) présente un nombre d'éléments de commutation électriques (101), dans lequel le dispositif de commande (30) est configuré pour actionner les éléments de commutation électriques (101),
- dans lequel le dispositif de mesure (40) est configuré pour mesurer et pour évaluer courants et tensions du convertisseur de courant (100) selon différents états d'activation de la première source d'énergie (4), de la deuxième source d'énergie (5) et différents états de commutation des éléments de commutation (101) de telle manière que défauts d'isolement éventuels peuvent être détectés et localisés dans le système électrique (300) entier.
